Europäisches Patentamt

European Patent Office

Office européen des brevets

(11) Publication number: **0 113 529**
**B1**

## EUROPEAN PATENT SPECIFICATION

(45) Date of publication of patent specification: **03.05.89**

(51) Int. Cl.⁴: **H 02 P 8/00**

(21) Application number: **83307298.6**

(22) Date of filing: **30.11.83**

(54) **Drive control method for stepping motors.**

(30) Priority: **03.12.82 JP 211368/82**
**17.08.83 JP 150078/83**

(43) Date of publication of application:
**18.07.84 Bulletin 84/29**

(45) Publication of the grant of the patent:
**03.05.89 Bulletin 89/18**

(84) Designated Contracting States:
**DE FR GB**

(56) References cited:
**DE-A-2 634 887**
**DE-A-2 852 211**

**PATENT ABSTRACTS OF JAPAN, vol. 6, no. 189
(E-133)1067r, 28th September 1982; & JP - A -
57 101 597 (WATARU SHIMIZU) 24-06-1982**

(73) Proprietor: **MIKUNI KOGYO KABUSHIKI KAISHA
13-11, Sotokanda 6-chome
Chiyoda-ku Tokyo (JP)**

(72) Inventor: **Sakurai, Shigeo
Hishinumakaigan 2-32 Chigasaki-shi
Kanagawa-ken (JP)**

(74) Representative: **Woodin, Anthony John et al
Fitzpatricks Europe House Box No. 88 World
Trade Centre East Smithfield
London E1 9AA (GB)**

Courier Press, Leamington Spa, England.

## Description

The present invention relates to a drive control method for stepping motors.

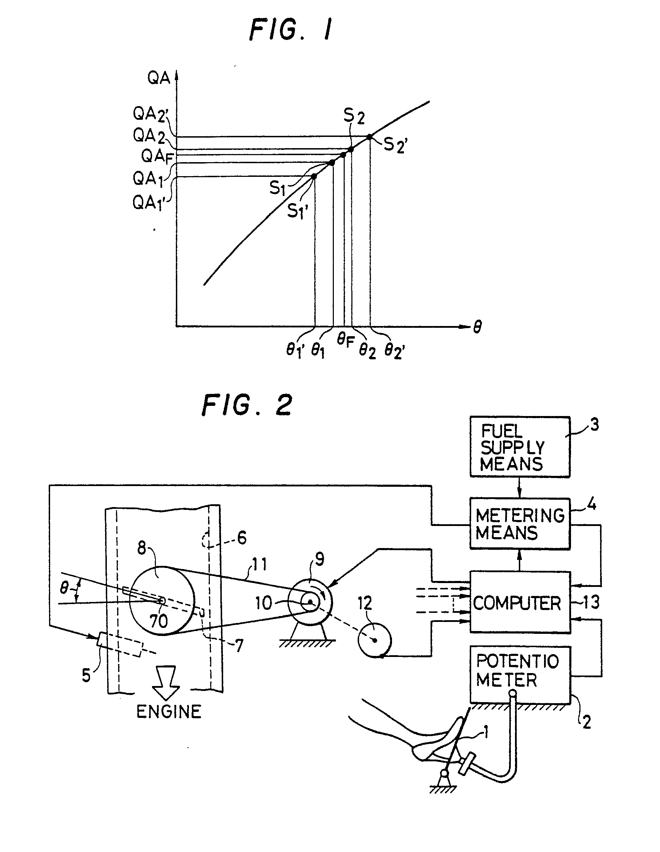

Conventionally, for example, in a fuel supply device for internal combustion engines in which the air amount to be supplied to the engine is adapted to be controlled by a throttle actuator comprising a stepping motor, the opening degree $\theta$ of the throttle valve is stepwisely determined in correspondence to each unit step S of the stepping motor. Referring to Fig. 1, it shall be explained briefly in the following. In this case an opening degree $\theta_F$ of the throttle valve to give a desired air amount $QA_F$ is between the opening degree $\theta_1$ at the first step $S_1$ of the stepping motor and the opening degree $\theta_2$ at the second step $S_2$ which follows the first step $S_1$, this air amount $QA_F$ is substituted by either one of the air amount $QA_1$ of the opening degree $\theta_1$ and the air amount $QA_2$ by the opening degree $\theta_2$. Therefore, this kind of the device has such a defect as not being able to realize the above mentioned proper opening degree by being regulated by the stepwise action of the stepping motor or by the step even when a proper opening degree is obtained with high accuracy basing upon various driving data. Therefore, such a method as to use a micro step is thought of, but it is not apt for practical uses due to the inaccuracy of the action thereof.

The primary object of the present invention is, in view of the above circumstances, to provide a drive control method for stepping motors enabled to obtain substantially an intermediate rotation position between the unit steps.

This object is attained, according to the present invention, by providing a first step for stopping a rotor by a time length $t_1$ at a first angular position rotated one step, a second step for stopping the rotor by a time length $t_2$ same as or different from the time length $t_1$ at a second angular position rotated at least one step from the first angular position, and a third step for actuating the rotor repeatedly in a period consisting of the combination of the first and second steps.

Accordingly, in one aspect the invention provides a method of controlling the operation of a stepping motor so as to simulate the rotor of the stepping motor stopping at an angular position $(\theta_F)$ intermediate two other angular positions $(\theta_1$ and $\theta_2)$ defined by two adjacent steps $(S_1$ and $S_2)$, characterised in that:—

the rotor of the stepping motor is driven to and stopped for a first time length $(t_1)$ at a first angular position $(\theta_1)$ defined by the step $(S_1)$ to one side of the intermediate position $(\theta_F)$, and is then driven to and stopped for a second time length $(t_2)$ at a second angular position $(\theta_2)$ defined by the step $(S_2)$ to the other side of the intermediate position $(\theta_F)$; and in that

this driving to and stopping at each step in turn is cyclicly repeated, the desired intermediate angular position $(\theta_F)$ being effectively obtained by selecting the ratio of the two time lengths $(t_1 : t_2)$ to be a predetermined value appropriate to that intermediate angular position $(\theta_F)$.

Naturally, the invention also extends to a method of controlling the air supply to an internal combustion engine, characterised in that the amount of air fed to the engine is regulated by a throttle valve that is itself regulated by a stepping motor controlled by a control method as described and herein claimed.

The nature of the present invention will become more apparent during the course of the following detailed description with reference to the accompanying Drawings, in which:—

Fig. 1 is an explanatory diagram showing an example of the fuel supply device for internal combustion engines provided with the stepping motor to be driven by the method according to the present invention;

Fig. 2 is a view showing the relation between the throttle valve opening degree and the air amount to be controlled by the stepping motor;

Fig. 3 is a diagram showing an embodiment of the control method for the stepping motor according to the present invention;

Fig. 4 and Fig. 5 are diagrams showing the change of the throttle valve opening degree and air amount to be controlled by the stepping motor which is actuated by the method shown in Fig. 3.

First, referring to Fig. 2, an example of the fuel supply device for internal combustion engines in which the throttle valve is actuated by the stepping motor shall be explained. The reference numeral 1 is an accelerator pedal, 2 is a potentiometer to convert the displacement of the accelerator pedal 1 into an electric signal, 3 is a fuel supply means, 4 is a metering means to measure the fuel to be supplied from the fuel supply means 3, 5 is an injector connected to the metering means 4 and arranged in an intake manifold bore 6, 7 is a throttle valve to control the air amount to be supplied to the engine, 8 is a pulley fixed on the driving shaft 70 of the throttle valve 7 on the outside of the intake manifold bore 6, 9 is a stepping motor arranged on an adequate position near the intake manifold bore 6, 10 is a pulley fixed on the rotor shaft of the stepping motor 9, 11 is a belt hung between the pulleys 8 and 10, 12 is a potentiometer to convert the rotation amount of the stepping motor 9 or the opening degree of the throttle valve 7 into an electric signal, and 13 is a computer which includes a microprocessor, specific purpose input/output interface and memory, puts in output signals from the potentiometers 2 and 12, metering means 4 and various sensors not shown for detecting the engine operating state, environmental conditions and the like, puts out command signals to the metering means 4 to secure a fuel injection amount to be selected by the displacement of the accelerator pedal 1 and concentrically controls the throttle valve opening degree and number of idling revolutions responding to the fuel injection amount to the optimum values in conformity with the operating state of the engine.

Next, the operation of the above mentioned device shall be explained.

When the driver steps on the acclerator pedal 1, a signal put out from the potentiometer 2 in accordance with the stepped-on amount is put in the computer 13. The computer 13 decides the fuel amount to be flowed out from the injector 5 in accordance with the operating state of the engine at that moment and the thus decided amount of the fuel is injected into the intake manifold bore 6 through the injector 5. On the other hand, the computer 13 calculates the optimum air amount at that moment basing upon the inputs from the above mentioned respective sensors, puts out the result to the stepping motor 9 in the form of a pulse signal and brings the throttle valve 7 into the opening degree position able to obtain the optimum air amount through the pulleys 8, 10 and the belt 11. In this mode, as the computer 13 keeps on always calculating the optimum air supply amount at each moment, it results in always supplying a proper air-fuel mixture to the engine during the operation.

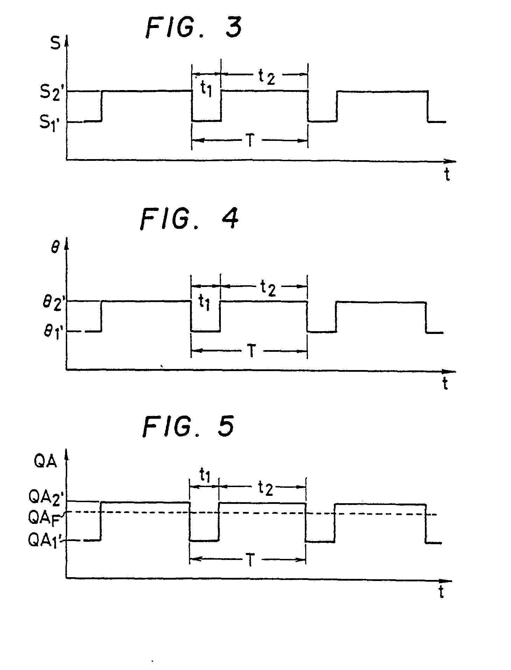

By the way, during the above mentioned control, the stepping motor 9, for example, as shown in Fig. 3, is controlled so as to repeat the action of such period

$$T(=t_1+t_2)$$

as to make the rotor stop during the time length $t_1$ in the angular position obtainable at the step $S_1$ or at the first step $S_1'$, before the step $S_1$ by at least one step (in Fig. 1 one step before the step $S_1$) and next during the time length $t_2$ in the angular position obtainable at the step $S_2$ or at the second step $S_2'$ after the step $S_2$ by at least one step and after the first step $S_1'$ by a plurality of steps (in Fig. 1 one step after the step $S_2$). Here, T is, for example, 16 ms and, as the throttle valve opening degree $\theta$ as well as the air amount QA may be thought to linearly change in the micro section between the respective angular positions obtained at the steps $S_1'$ and $S_2'$, the $t_2$ is given by

$$t_2 = T \times \frac{\theta_F - \theta_1'}{\theta_2' - \theta_1'} = T \times \frac{QA_F - QA_1'}{QA_2' - QA_1'} \qquad (1)$$

where $\theta_1'$ and $\theta_2'$ represent the throttle valve opening degrees at the steps $S_1'$ and $S_2'$, and $QA_1'$ and $QA_2'$ represent the air amounts at the opening degrees $\theta_1'$ and $\theta_2'$. When the stepping motor 9 is actuated with the period T repeatedly during a sufficient long time compared with said period T, the throttle valve 7 will be made to swing with the period T between the opening degrees $\theta_1'$ and $\theta_2'$ as shown in Fig. 4. Accordingly, the air amount QA to be supplied to the engine periodically changes to $QA_1'$ during the time length $t_1$ and next to $QA_2'$ during the time length $t_2$ as shown in Fig. 5. Accordingly, the average value $\overline{QA}$ of the air amount QA to be supplied to the engine during the one period T is given by

$$\overline{QA} = \frac{QA_1' \times t_1 + QA_2' \times t_2}{T} \qquad (2)$$

and, as the ratio of $t_1$ to $t_2$ is so selected that the $\overline{QA}$ is to be equal to a desired air amount $QA_F$, the desired air amount $QA_F$ is obtainable. In this case, as the stepping motor 9 is so controlled as to act by a plurality of steps, the action thereof is accurate.

As described above, as the present invention is so formed that the stepping motor 9 is stopped at the first step and at the second step advanced by a plurality of steps from said first step and that the intermediate position of the unit step is substantially attained as an average value in a time scale at between the first step and the second step by properly selecting the ratio of stationary time lengths at the first step and the second step, more minute control beyond the space between the steps or the mechanical resolving ability of the stepping motor is able to be accurately effected and it has such an effect as to be able to elevate the acting speed of the stepping motor without introducing the deterioration of the resolving ability.

## Claims

1. A method of controlling the operation of a stepping motor (9) so as to simulate the rotor of the stepping motor (9) stopping at an angular position ($\theta_F$) intermediate two other angular positions ($\theta_1$ and $\theta_2$) defined by two adjacent steps ($S_1$ and $S_2$), characterised in that:—

the rotor of the stepping motor (9) is driven to and stopped for a first time length ($t_1$) at a first angular position ($\theta_1$) defined by the step ($S_1$) to one side of the intermediate position ($\theta_F$), and is then driven to and stopped for a second time length ($t_2$) at a second angular position ($\theta_2$) defined by the step ($S_2$) to the other side of the intermediate position ($\theta_F$); and in that

this driving to and stopping at each step in turn is cyclicly repeated, the desired intermediate angular position ($\theta_F$) being effectively obtained by selecting the ratio of the two time lengths ($t_1 : t_2$) to be a predetermined value appropriate to that intermediate angular position ($\theta_F$).

2. A method of controlling the air supply to an internal combustion engine, characterised in that the amount of air fed to the engine is regulated by a throttle valve (7) that is itself regulated by a stepping motor (9) controlled by a control method as claimed in the preceding Claim.

## Patentansprüche

1. Verfahren für die Antriebssteuerung eines Schrittmotors (9), bei dem das Anhalten des Rotors des Schrittmotors (9) in einer Winkelstellung ($\theta_F$) zwischen zwei anderen Winkelstellun-

gen ($\theta_1$ und $\theta_2$), definiert durch zwei nebeneinanderliegende Schritte ($S_1$ und $S_2$), simuliert wird, dadurch gekennzeichnet, daß der Rotor des Schrittmotors (9) zu einer ersten Winkelposition ($\theta_1$) bewegt wird, welche durch den Schritt ($S_1$) zur einen Seite der Zwischenposition ($\theta_F$) definiert ist und für eine erste Zeitspanne ($t_1$) gestoppt wird, und sodann zu einer zweiten Winkelposition ($\theta_2$, bewegt wird, welche durch den Schritt ($S_2$) zur anderen Seite der Zwischenposition ($\theta_F$) definiert ist und für eine zweite Zeitspanne ($t_2$) gestoppt wird, und

daß diese Bewegungs- und Stoppvorgänge der Reihe nach periodisch weiderholt werden, wobei die gewünschte Zwischenwinkelposition ($\theta_F$) durch die Wahl des Verhältnisses der zwei Zeitspannen ($t_1 : t_2$) effektiv erreicht wird, welches einen vorbestimmten Wert ergibt, der als Zwischenwinkelposition ($\theta_F$) geeignet ist.

2. Verfahren zur Steuerung der Luftzufuhr einer Verbrennungskraftmaschine, dadurch gekennzeichnet, daß die der Verbrennungskraftmaschine zugeführte Luftmenge durch ein Drosselventil (7) geregelt wird, welches seblst durch einen Schrittmotor (9) geregelt wird, der durch ein Verfahren für die Antriebssteuerung gemäß dem voranstehenden Anspruch gesteuert wird.

**Revendications**

1. Procédé pour commander le fonctionnement d'un moteur pas à pas (9) de façon à simuler le rotor d'un moteur pas à pas (9) s'arrêtant en une position angulaire ($\theta_F$) intermédiaire entre deux autres positions angulaires ($\theta_1$ et $\theta_2$) définies par deux pas adjacents ($S_1$ et $S_2$), caractérisé en ce que:

le rotor du moteur pas à pas (9) est entraîné jusqu'à et arrêté pendant, une première durée ($t_1$) en une première position angulaire ($\theta_1$) définie par le pas ($S_1$) d'un côté de la position intermédiaire ($\theta_F$), et est ensuite entraîné jusqu'à et arrêté pendant, une seconde durée ($t_2$) en une seconde position angulaire ($\theta_2$) définie par le pas ($S_2$) de l'autre côté de la position intermédiaire ($\theta_F$); et en ce que

cet entraînement jusqu'à et cet arrêt en chaque pas est à son tour répété de manière cyclique, la position intermédiaire désirée ($\theta_F$) étant effectivement obtenue en sélectionnant le rapport entre les deux durée ($t_1 : t_2$) à une valeur prédéterminée appropriée à la position angulaire intermédiaire ($\theta_F$).

2. Procédé de commande de l'air appliqué à un moteur à combustion interne, caractérisé en ce que la quantité d'air appliquée au moteur est réglée par une vanne de distribution (7) qui est elle-même réglée par un moteur pas à pas (9) commandé par un procédé de commande selon la revendication précédente.

## FIG. 1

## FIG. 2

## FIG. 3

S

S₂'

S₁'

t₁

t₂

T

t

## FIG. 4

θ

θ₂'

θ₁'

t₁

t₂

T

t

## FIG. 5

QA

QA₂'

QAF

QA₁'

t₁

t₂

T

t